# FASCICULE DE BREVET EUROPEEN

(11) **EP 1 945 077 B1**
(45) Date de publication et mention de la délivrance du brevet: **18.04.2012**
(21) Numéro de dépôt: 06820235.7
(22) Date de dépôt: 18.10.2006
(51) Int. Cl.: A47J 39/00

(54) **CHARIOT DE DISTRIBUTION DE PLATEAUX REPAS**
WAGEN ZUR AUSGABE VON TABLETTS
MEAL TRAY DISPENSING TROLLEY

(30) Priorité: 19.10.2005 FR 0510656
(43) Date de publication de la demande: 23.07.2008
(73) Titulaire: Société de Gestion d'Hôtels et Restaurants - SOGERES, 92513 Boulogne-Billancourt Cedex (FR)
(72) Inventeur: FONTAN, Jean-Paul, 8170 La Celle-Saint-Cloud (FR)
(74) Mandataire: Hecké, Gérard
(86) Numéro de dépôt international: PCT/FR2006/002341
(87) Numéro de publication internationale: WO 2007/045764

(56) Documents cités:
- EP-A- 0 717 946
- FR-A- 2 796 818
- US-A- 5 240 320

## Description

### Domaine technique de l'invention

L'invention concerne un chariot de distribution de plateaux repas permettant de positionner à chaque niveau de chargement deux plateaux adjacents coplanaires ayant chacun une partie chaude et une partie froide, ledit chariot comprenant :
- une cuve parallélépipédique ouverte selon deux faces opposées chacune munie d'une porte, lesdites faces étant reliées par deux parois latérales,
- des plaques chauffantes superposées dans la zone centrale de la cuve, servant d'appui aux parties chaudes des plateaux repas,
- des supports de plaques agencés le long des parois latérales de la cuve,
- des premières et deuxièmes glissières agencées le long des parois latérales de la cuve pour le guidage et le maintien des parties froides des plateaux,
- une carrosserie protégeant ladite cuve.

### État de la technique

Ces chariots de l'art antérieur sont destinés au stockage et à la distribution de plateaux repas avec mets chauds et froids sur un plateau unique. Ils sont notamment employés dans les collectivités et les hôpitaux pour mettre en oeuvre le procédé de distribution en liaison froide, dans lequel les repas sont rapidement refroidis dès leur sortie de cuisson. Ils sont stockés au froid et peuvent être distribués plusieurs jours après leur confection. Ils sont réchauffés ou plus précisément remis à la température de consommation juste avant leur distribution aux patients.

Ce type de chariots est souvent utilisé car les moyens de chauffage de la partie chaude et les moyens de réfrigération de la partie froide des plateaux repas sont intégrés au chariot. La présence encombrante d'un module technique accolé et détachable contenant ces moyens est donc évitée.

Néanmoins, les chariots existants ne sont pas complètement satisfaisants. Dans les techniques de fabrication connues, le chariot est réalisé d'une pièce, en matière plastique rotomoulée. Il est à double parois nervurées et remplies de mousse cellulaire pour le rendre isotherme. Les nervures forment des croisillons et la mousse, de même nature que les parois, adhèrent à ces dernières en une couche d'épaisseur suffisante pour constituer des pontages aux points de croisement des nervures. Bien que la structure tridimensionnelle donnée aux parois assure au chariot une grande robustesse ainsi qu'une grande résistance aux chocs, ce type de chariot est très compliqué à fabriquer et reste onéreux.

Le document FR-A-2796818 décrit un chariot dont la fabrication est simplifiée. Ce chariot comporte une enveloppe parallélépipédique ayant deux parois latérales et deux portes parallèles deux à deux. Les parois latérales sont garnies par un isolant thermique, notamment à base de mousse de polyuréthane. L'extérieur des parois est en tôle plastifiée colorée, tandis que l'intérieur est réalisé en acier inoxydable. Dans certaines variantes de réalisation, les glissières et les supports de plaques chauffantes sont directement conformés dans la couche de l'acier inoxydable, ce qui est difficile et coûteux à fabriquer. Dans d'autres variantes, les glissières et les supports de plaques chauffantes sont des éléments qui sont rapportés à l'intérieur de l'enveloppe sur l'intérieur des parois latérales, ce qui est délicat et fastidieux à réaliser car le monteur doit s'agenouiller et pratiquer ces opérations depuis l'extérieur de l'enveloppe. De plus, la forme, la constitution et l'assemblage relatif des parois procurent la rigidité à l'ensemble de l'enveloppe. Pour un gain de poids du chariot, les parois sont souvent de faible épaisseur et la rigidité peut parfois être insuffisante.

### Objet de l'invention

L'invention a pour but de pallier à ces inconvénients en proposant un chariot de distribution de plateaux repas de conception et de fabrication simples et peu onéreuses, et présentant une bonne rigidité.

Selon l'invention, ce but est atteint par le fait qu'il comporte :
- des ouvertures pratiquées dans les parois latérales de la cuve pour loger des éléments rapportés depuis l'extérieur des parois latérales et venant en saillie à l'intérieur des parois latérales par insertion dans lesdites ouvertures, lesdits éléments rapportés constituant les supports de plaques et les premières et deuxièmes glissières,
- des moyens de support agencés à proximité de chaque face ouverte pour être en saillie à l'extérieur des parois de la cuve,
- des panneaux rigides formant la carrosserie, fixés sur les moyens de support en déterminant un intervalle par rapport à la cuve pour recevoir un isolant thermique.

On comprend bien que la fabrication d'un chariot conforme à l'invention est facilitée car les éléments constituant les premières et deuxièmes glissières ainsi que les supports de plaques sont rapportés et insérés depuis l'extérieur dans des ouvertures prévues dans les parois de la cuve, et non pas depuis l'intérieur comme dans certaines variantes de l'art antérieur. Les parois de la cuve sont planes, au contraire des autres variantes de l'art antérieur.

Dans un mode de réalisation préféré, les moyens de support sont constitués par deux cadres de rigidification encadrant chacun une face ouverte de la cuve. La combinaison de la cuve parallélépipédique et des cadres de rigidification constitue une structure totalement rigide, pour laquelle les possibilités de déformation du type parallélogramme déformable sont supprimées. Cette structure peut être carrossée par des panneaux rigides de tout type car ces panneaux contribuent pour une part faible à la rigidité du chariot, au contraire de l'art antérieur où il était nécessaire d'utiliser de la tôle. Des panneaux de faible poids et isolants sont préférés, tels que par exemple des panneaux en matière acrylique. Comme les panneaux de la carrosserie sont isolants, l'isolant thermique intercalé entre la cuve et la carrosserie peut être de moindre qualité, donc moins onéreux et de préférence plus léger.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

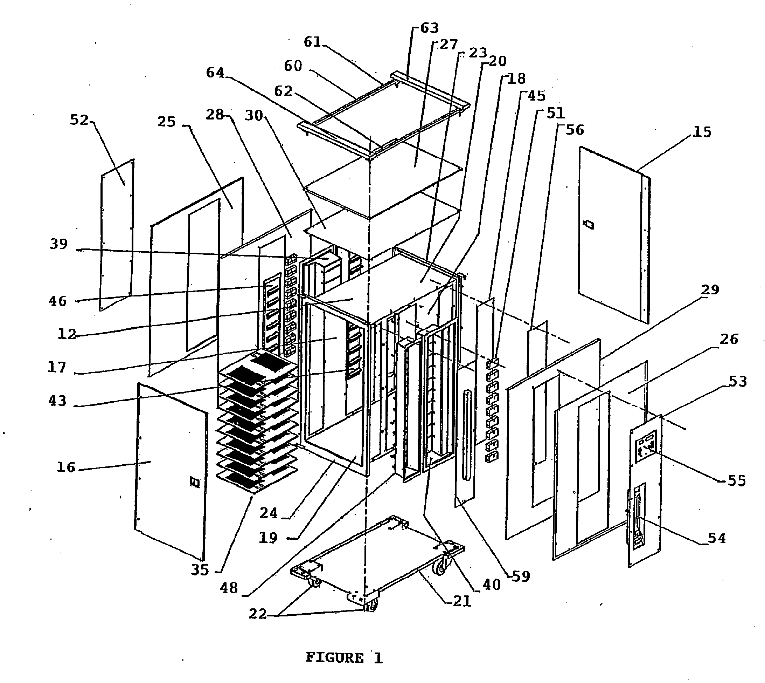

- la figure 1 est une vue éclatée en perspective d'un exemple de chariot de distribution conforme à l'invention,
- la figure 2 est une vue en coupe du chariot de la figure 1 selon un plan de coupe horizontal.

### Description de modes particuliers de réalisation

En référence aux figures, un chariot 10 de distribution de plateaux repas 11 comporte une cuve 12 parallélépipédique en acier inoxydable brossé ou gravé. La cuve 12 est ouverte selon deux faces opposées 13, 14 chacune munie d'une porte, respectivement référencées 15 et 16. Les faces 13, 14 sont reliées par deux parois latérales 17, 18 parallèles deux à deux, et deux parois horizontales parallèles deux à deux, l'une inférieure et l'autre supérieure, respectivement référencées 19 et 20. La cuve 12 est fixée sur un socle 21 comprenant aux quatre coins des roues 22 montées à rotation sur des axes verticaux, et des butées 31 saillantes en caoutchouc.

Deux cadres de rigidification 23, 24 rectangulaires encadrent chacun une face ouverte 13, 14 et constituent des moyens de support de la carrosserie. Dans la variante décrite, chaque cadre de rigidification 23, 24 est rapporté et fixé par tout moyen approprié sur l'extérieur des parois 17, 18, 19, 20 de la cuve 12, de sorte qu'il soit en saillie desdites parois. La carrosserie de la cuve 12 est constituée par deux panneaux latéraux 25, 26 fixés sur des montants verticaux des cadres de rigidification 23, 24, et un panneau supérieur 27 fixé sur les traverses supérieures des cadres de rigidification 23, 24. Par cette disposition, un intervalle est présent entre la cuve et la carrosserie pour autoriser la présence d'un isolant thermique. La fixation des panneaux 25, 26, 27 peut être réalisée par tout moyen connu, par exemple par collage, par vissage ou par rivetage. La section des montants et des traverses, ici du type tubulaire, des cadres de rigidification est un carré, mais elle peut être quelconque sans sortir du cadre de l'invention. Par exemple, la section des profilés constituant les montants et les traverses des cadres de rigidification 23, 24 peut être conformée pour présenter une aile de retenue parallèle à la paroi 17, 18, 20 en regard. La face extérieure du panneau 25, 26, 27 correspondant est alors fixée sur la face intérieure de l'aile de retenue.

Dans d'autres variantes non représentées, les cadres de rigidification 23, 24 sont directement réalisés par la cuve 12 elle-même. Lors de la fabrication de la cuve 12, les parois 17, 18, 19, 20 sont d'abord pliées à leur extrémité pour constituer des rebords faisant saillie. Ensuite, les parois 17, 18, 19, 20 sont assemblées entre elles, par exemple par soudage, de sorte que l'ensemble des rebords agencés autour de chaque face ouverte 13, 14 constitue un cadre de rigidification 23, 24. La section des rebords pliés peut être quelconque dès lors que la fixation de la carrosserie rapportée est autorisée. Les panneaux rigides 25, 26, 27 sont garnis de caches isolants respectivement référencés 28, 29, 30, par exemple en mousse de polyuréthane, constituant l'isolation thermique. De manière avantageuse, les panneaux 25, 26, 27 sont réalisés en acrylique, qui est un matériau léger, isolant, rigide, et potentiellement transparent et/ou coloré. Les caches isolants 28, 29, 30 peuvent donc être réalisés dans une matière de qualité moyenne, car une partie de l'isolation est réalisée par les panneaux 25, 26, 27. Les caches isolants 28, 29, 30 peuvent être de toute nature, rigides ou souples, collés ou non sur les faces intérieures des panneaux 25, 26, 27. Dans l'exemple décrit, les caches isolants 28, 29, 30 sont rigides et viennent s'intercaler entre les panneaux 25, 26, 27 et les faces extérieures des montants et de la traverse supérieure des cadres de rigidification 23, 24. Dans d'autres variantes, les caches isolants 28, 29, 30 sont logés entre les cadres de rigidification 23, 24, dans l'intervalle susmentionné prévu à cet effet.

Chaque porte 15, 16 comporte un panneau en acrylique transparent, rigidifié sur un côté par un profilé 32, 33 monté à pivotement sur des gonds 34 prévus sur le cadre de rigidification 23, 24 correspondant. Néanmoins la matière des panneaux 25, 26, 27 et des portes 15, 16 peut être quelconque, par exemple en polycarbonate transparent ou translucide. Les portes 15, 16 se replient avantageusement contre les panneaux latéraux 25, 26, en position ouverte, pour la distribution des plateaux repas 11 aux patients. Un système de blocage (non représenté) en position ouverte peut être intégré dans les portes 15, 16 et dans les panneaux latéraux 25, 26.

Les deux portes 15, 16 donnent accès à l'intérieur de la cuve 12 pour permettre le chargement de deux séries de plateaux repas 11 superposés. Chaque plateau repas 11 de forme rectangulaire est subdivisé en une partie froid 11 a réservée à l'entrée et au dessert, et une partie chaude 11 b pour le plat principal. La partie chaude 11 b est introduite en premier dans la cuve 12 de telle manière que la partie froide 11 a se trouve toujours située du côté de la porte 15, 16 correspondante.

A chaque niveau de chargement est agencée une plaque chauffante 35 double, équipée de deux circuits de chauffage 36, 37 pour la réception des parties chaudes 11 b de deux plateaux 11 adjacents coplanaires. Toutes les plaques chauffantes 35 sont réparties à intervalles réguliers dans des plans horizontaux superposés dans la zone centrale de la cuve 12, pour constituer une zone chaude. De chaque côté de la zone centrale se trouve une zone froide qui se prolonge jusqu'à la porte 15, 16 correspondante.

Les plaques chauffantes 35 ont des circuits de chauffage 36, 37 à résistance sérigraphiée sur une plaque de verre. Tout autre système de chauffage électrique peut bien entendu être utilisé, notamment des foyers à tubes halogènes ou à induction électromagnétique. Les plateaux repas 11 sont réalisés en un matériau plastique thermoformé, par exemple en polycarbonate transparent ou peint, avec insertion d'un aimant de détection 38 se trouvant à la périphérie de la partie chaude 11 b.

Chaque plaque chauffante 35 est maintenue à deux coins diagonalement opposés par deux supports de plaque 39, 40 conformés selon des colonnes creuses verticales solidaires des parois latérales 17, 18. Les colonnes délimitent de part et d'autre de la zone chaude, deux cheminées 41, 42 d'extraction de l'air chaud engendré pendant la phase de remise en température. L'écoulement d'air chaud est accumulé par une plaque d'aluminium (non représentée) logée dans la partie supérieure du chariot.

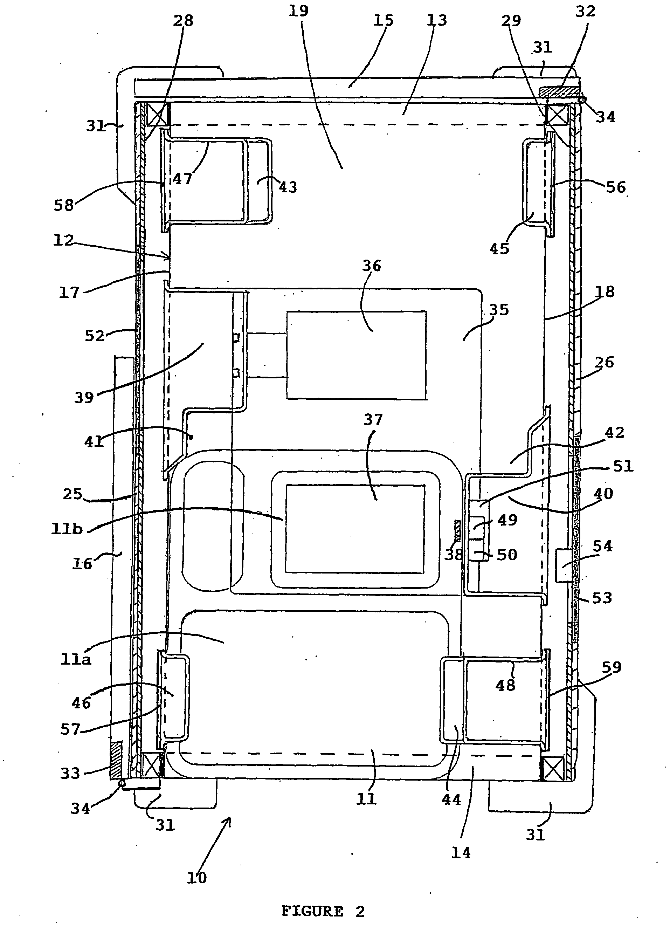

Les parties chaudes 11 b des plateaux repas 11 d'un même niveau prennent appui sur les plaques chauffantes 35, tandis que le guidage et le positionnement des parties froides 11 a des plateaux repas 11 sont assurés de chaque côté des parois latérales 17, 18 par une première glissière 43, 44 et une deuxième glissière 45, 46. Les supports de plaque 39, 40 et les glissières 43, 44, 45, 46 des deux côtés de la cuve 12 sont symétriques par rapport au centre des diagonales d'un même niveau. Sur la figure 2, la partie froide 11a du plateau repas 11 située au voisinage de la porte 16, est supportée à droite par la première glissière 44 et à gauche par la deuxième glissière 46. Une disposition inversée par rapport à l'axe longitudinal du chariot 10 est prévue du côté de la porte 15 opposée, où la partie froide 11a du plateau repas 11 est supportée à droite par la deuxième glissière 45 et à gauche par la première glissière 43.

Les premières glissières 43, 44 s'étendent parallèlement depuis la paroi interne de deux goulottes 47, 48 verticales, dans lesquelles sont intégrés des accumulateurs de frigories, lesquels sont formés par des plaques eutectiques.

Plus précisément, les goulottes 47, 48 et les premières glissières 43, 44 sont constituées par deux éléments rapportés en plastique thermoformé. De même, les deuxièmes glissières 45, 46, ainsi que les colonnes constituant les supports de plaques 39, 40 sont des éléments plastiques thermoformés rapportés. Ils sont logés après insertion depuis l'extérieur dans des ouvertures de forme complémentaire prévues dans les parois latérales 17, 18 de la cuve 12. Les éléments rapportés sont conformés en forme de bac rectangulaire dont le bord supérieur de la cavité comporte sur la périphérie une collerette latérale de positionnement destinée à être en contact contre l'extérieur de la paroi latérale 17, 18 correspondante et sont fixés par tout moyen approprié tel que par exemple le collage, le vissage ou le rivetage. D'autres matières peuvent néanmoins être utilisées pour la fabrication des éléments rapportés sans sortir du cadre de l'invention.

La fabrication d'un chariot conforme à l'invention est facilitée car les éléments rapportés constituant les premières et deuxièmes glissières 43, 44, 45, 46 ainsi que les supports de plaques 39, 40 sont rapportés et insérés depuis l'extérieur dans des ouvertures prévues dans les parois 17, 18 de la cuve 12, et non pas depuis l'intérieur comme dans certaines variantes de l'art antérieur. Les parois 17, 18 de la cuve 12 sont planes, au contraire des autres variantes de l'art antérieur.

Les supports de plaques 39, 40 comportent à chaque niveau un connecteur électrique 49 embrochable pour l'alimentation des circuits de chauffage 36, 37, et un détecteur 50 de présence des plateaux 11 destiné à coopérer avec l'aimant 38. Le connecteur 49 et le détecteur 50 sont placés sur un même support repéré 51. L'alimentation des circuits de chauffage 36, 37 est commandée par les détecteurs 50. Dans certaines variantes, chaque détecteur 50 est relié à une diode lumineuse visible depuis l'extérieur, par exemple au travers des portes 15, 16, et/ou des panneaux latéraux 25, 26, pour indiquer l'état de chargement du chariot 10 à l'opérateur effectuant la distribution des plateaux 11 sans devoir ouvrir les portes 15, 16.

Chaque panneau latéral 25, 26 comporte une trappe d'accès bouchée par une plaque amovible 52, 53 de même matériau que les panneaux 25, 26 pour autoriser l'accès aux supports 51 depuis l'extérieur du chariot 10. Une prise de connexion 54 à basse tension pour le raccordement électrique du chariot 10 est prévue dans la plaque amovible 53, de même qu'un boîtier de commande 55 qui s'étend au nu du panneau latéral 26, c'est-à-dire sans débord à l'extérieur.

Les éléments rapportés constituant les deuxièmes glissières 45, 46 et les goulottes 47, 48 sont conformés en forme de bac rectangulaire dont la cavité est obturée à l'extérieur de la cuve 12 par des plaques 56, 57, et respectivement 58, 59, maintenues en appui contre la collerette desdits éléments par tout moyen approprié. Le recours à des éléments rapportés sur les parois latérales 17, 18 permet de faciliter la fabrication de la cuve 12 et d'en abaisser le coût de revient. Ces éléments aux formes complexes sont obtenus aisément grâce à l'utilisation d'une matière plastique thermoformée, par exemple du polycarbonate transparent ou translucide (par exemple par moulage).

Dans certaines variantes, les premières et secondes glissières 43, 44, 45, 46 comportent un système d'éclairage (non représenté) intégré dans les éléments rapportés, et visible depuis l'extérieur par transparence de la matière plastique desdits éléments, et de la matière constitutive des portes 15, 16.

De manière avantageuse, le chariot 10 comporte une galerie 60 qui possède au moins deux profilés longitudinaux 61, 62 fixés sur le panneau supérieur 27 par tout moyen approprié. Lesdits profilés longitudinaux 61, 62 sont surmontés par deux profilés transversaux 63, 64 de section oblongue pour faciliter la préhension. Les profilés longitudinaux 61, 62 peuvent être surélévés par rapport au panneau supérieur 27 pour faciliter l'écoulement des produits lors du nettoyage du chariot 10. La galerie 60 est prévue pour faciliter la manutention du chariot et pour protéger le panneau supérieur 27 souvent sujet à des chocs extérieurs. Dans certaines variantes, chaque profilé transversal 61, 62 fait saillie du nu d'une porte 15, 16 pour augmenter la protection de la carrosserie et des portes 15, 16.

## Revendications

1. Chariot (10) de distribution de plateaux repas (11) permettant de positionner à chaque niveau de chargement deux plateaux (11) adjacents coplanaires ayant chacun une partie chaude (11 b) et une partie froide (11 a), ledit chariot (10) comprenant :
- une cuve (12) parallélépipédique ouverte selon deux faces (13, 14) opposées chacune munie d'une porte (15, 16), lesdites faces (13, 14) étant reliées par deux parois latérales (17,18),
- des plaques chauffantes (35) superposées dans la zone centrale de la cuve (12), servant d'appui aux parties chaudes (11 b) des plateaux repas (11),
- des supports de plaques (39, 40) agencés le long des parois latérales (17, 18) de la cuve (12),
- des premières et deuxièmes glissières (43, 44, 45, 46) agencées le long des parois latérales (17, 18) de la cuve (12) pour le guidage et le maintien des parties froides (11 a) des plateaux (11),
- une carrosserie protégeant ladite cuve (12),
**caractérisé en ce qu'**il comporte :
- des ouvertures pratiquées dans les parois latérales (17, 18) de la cuve (12) pour loger des éléments rapportés depuis l'extérieur des parois latérales (17, 18) et venant en saillie à l'intérieur des parois latérales (17, 18) par insertion dans lesdites ouvertures, lesdits éléments rapportés constituant les supports de plaques (39, 40) et les premières et deuxièmes glissières (43, 44,45,46),
- des moyens de support agencés à proximité de chaque face ouverte (13, 14) pour être en saillie à l'extérieur des parois (17, 18, 19, 20) de la cuve (12),
- des panneaux rigides (25, 26, 27) formant la carrosserie, fixés sur les moyens de support en déterminant un intervalle par rapport à la cuve (12) pour recevoir un isolant thermique.

2. Chariot (10) selon la revendication 1, **caractérisé en ce que** les éléments rapportés sont en matière plastique thermoformée.

3. Chariot (10) selon l'une quelconque des revendications 1 ou 2, **caractérisé en ce que** les moyens de support sont constitués par deux cadres de rigidification (23, 24) encadrant chacun une face ouverte (13, 14).

4. Chariot (10) selon l'une des revendications 1 à 3, **caractérisé en ce qu'**il comporte une galerie (60) composée d'au moins deux profilés longitudinaux (61, 62) fixés sur le panneau supérieur (27) de la carrosserie, et surmontés par deux profilés transversaux (63, 64).

5. Chariot (10) selon la revendication 4, **caractérisé en ce que** chaque profilé transversal (63, 64) de la galerie (60) fait saillie du nu d'une porte (15, 16).

6. Chariot (10) selon l'une quelconque des revendications 1 à 5, **caractérisé en ce que** les éléments rapportés comportent sur la périphérie une collerette latérale de positionnement contre l'extérieur de la paroi latérale (17, 18) correspondante de la cuve (12).

7. Chariot (10) selon l'une quelconques des revendications 1 à 6, **caractérisé en ce que** les panneaux (25, 26, 27) de la carrosserie sont réalisés en acrylique.

8. Chariot (10) selon l'une quelconque des revendications 2 à 7, **caractérisé en ce que** chaque porte (15, 16) comprend un panneau en acrylique, rigidifié sur un coté par un profilé (32, 33) monté à pivotement sur des gonds (34) prévus sur le cadre de rigidification (23, 24) correspondant.

9. Chariot (10) selon l'une quelconques des revendications 1 à 8, **caractérisé en ce que** les glissières (43, 44, 45, 46) comportent un système d'éclairage.

10. Chariot (10) selon l'une quelconques des revendications 1 à 9, **caractérisé en ce que** chaque support de plaques (39, 40) comporte un connecteur électrique (49) pour l'alimentation de la plaque chauffante (35) correspondante, ladite alimentation étant commandée par un détecteur (50) de présence des plateaux repas (11).

11. Chariot (10) selon la revendication 10, **caractérisé en ce que** le détecteur (50) de présence des plateaux repas (11) est raccordé à une diode lumineuse visible de l'extérieur dudit chariot (10).

## Claims

1. A dispensing trolley (10) for meal trays (11) enabling two adjacent coplanar trays (11) each having a hot part (11 b) and a cold part (11 a) to be positioned on each loading level, said trolley (10) comprising:
- a parallelepipedic enclosure (12) open on two opposite faces (13, 14) each equipped with a door (15, 16), said faces (13, 14) being connected by two side panels (17, 18),
- hot plates (35) superposed in the central zone of the enclosure (12), acting as support for the hot parts (11 b) of the meal trays (11),
- plate supports (39, 40) arranged along the side panels (17, 18) of the enclosure (12),
- first and second slides (43, 44, 45, 46) arranged along the side panels (17, 18) of the enclosure (12) for guiding and securing the cold parts (11 a) of the trays (11),
- a bodywork protecting said enclosure (12),
**characterized in that** it comprises:
- openings made in the side panels (17, 18) of the enclosure (12) to house add-on elements added from the outside of the side panels (17, 18) and salient inside the side panels (17, 18) by insertion in said openings, said add-on elements constituting the plate supports (39, 40) and the first and second slides (43, 44, 45, 46),
- support means arranged near to each open face (13, 14) to be salient outside the panels (17, 18, 19, 20) of the enclosure (12),
- rigid panels (25, 26, 27) forming the bodywork, fixed onto the support means determining a gap with respect to the enclosure (12) to receive a thermal insulator.

2. The trolley (10) according to claim 1, **characterized in that** the add-on elements are made of thermoformed plastic.

3. The trolley (10) according to one of claims 1 or 2, **characterized in that** the support means are formed by two strengthening frames (23, 24) each framing an open face (13, 14).

4. The trolley (10) according to one of claims 1 to 3, **characterized in that** it comprises a rack (60) composed of at least two longitudinal sections (61, 62) fixed onto the top panel (27) of the bodywork, whereon two profiles transverse sections (63, 64) are fitted.

5. The trolley (10) according to claim 4, **characterized in that** each transverse section (63, 64) of the rack (60) is salient from the vertical surface of a door (15, 16).

6. The trolley (10) according to any one of claims 1 to 5, **characterized in that** the add-on elements comprise a lateral flange on the periphery for positioning against the outside of the corresponding side panel (17, 18) of the enclosure (12).

7. The trolley (10) according to any one of claims 1 to 6, **characterized in that** the bodywork panels (25, 26, 27) are made from acrylic.

8. The trolley (10) according to any one of claims 2 to 7, **characterized in that** each door (15, 16) comprises an acrylic panel strengthened on one side by a section (32, 33) mounted pivoting on hinges (34) provided on the corresponding strengthening frame (23, 24).

9. The trolley (10) according to any one of claims 1 to 8, **characterized in that** the slides (43, 44, 45, 46) comprise a lighting system.

10. The trolley (10) according to any one of claims 1 to 9, **characterized in that** each plate support (39, 40) comprises an electric connector (49) for power supply of the corresponding hot plate (35), said power supply being controlled by a presence detector (50) of meal trays (11).

11. The trolley (10) according to claim 10, **characterized in that** the presence detector (50) of meal trays (11) is connected to a light-emitting diode visible from the outside of said trolley (10).

## Patentansprüche

1. Wagen (10) zur Ausgabe von Essenstabletts (11), der auf jeder Ebene die Positionierung zweier angrenzender, koplanarer Essenstabletts (11) erlaubt, die jeweils eine Heißzone (11b) und eine Kaltzone (11a) aufweisen, welcher Wagen (10) umfasst:
- ein quaderförmiges Gestell (12), das an zwei entgegengesetzten Seiten (13, 14) offen ist, die jeweils mit einer Tür (15, 16) versehen sind, welche Seiten (13, 14) über zwei Seitenwände (17, 18) miteinander verbunden sind,
- Heizplatten (35), die im mittleren Teil des Gestells (12) übereinander angeordnet sind und als Auflage für die Heißzonen (11b) der Essenstabletts (11) dienen, Auflagen (39, 40) für die Tabletts, die entlang der Seitenwände (17, 18) des Gestells (12) angeordnet sind,
- erste und zweite Gleitschienen (43, 44, 45, 46), die entlang der Seitenwände (17, 18) des Gestells (12) zum Führen und Halten der Kaltzonen (11a) der Tabletts (11) vorgesehen sind,
- eine Verkleidung, die das Gestell (12) schützt,
**dadurch gekennzeichnet, dass** er umfasst:
- Öffnungen in den Seitenwänden (17, 18) des Gestells (12), um Elemente aufzunehmen, die von außerhalb der Seitenwände (17, 18) angebracht werden und durch Einbringen in die genannten Öffnungen innerhalb der Seitenwände (17, 18) herausstehen, wobei die eingebrachten Elemente Auflagen (39, 40) für die Tabletts und die ersten und zweiten Gleitschienen (43, 44, 45, 46) bilden,
- Auflagemittel, die nahe jeder offenen Seite (13, 14) angeordnet sind und außen aus den Wänden (17, 18, 19, 20) des Gestells (12) herausstehen,
- starre, die Verkleidung bildende Platten (25, 26, 27), die an den Auflagemitteln befestigt sind und einen Spalt zum Gestell (12) bilden, um eine Wärmeisolierung aufzunehmen.

2. Wagen (10) nach Anspruch 1, **dadurch gekennzeichnet, dass** die angebrachten Elemente aus warmgeformtem Kunststoff bestehen.

3. Wagen (10) nach einem der Ansprüche 1 oder 2, **dadurch gekennzeichnet, dass** die Auflagemittel von zwei Versteifungsrahmen (23, 24) gebildet werden, die jeweils eine offene Seite (13, 14) einrahmen.

4. Wagen (10) nach einem der Ansprüche 1 bis 3, **dadurch gekennzeichnet, dass** er eine Randleiste (60) umfasst, die aus mindestens zwei Längsprofilschienen (61, 62) besteht, die an der oberen Platte (27) der Verkleidung angebracht sind und von zwei Querprofilschienen (63, 64) überragt werden.

5. Wagen (10) nach Anspruch 4, **dadurch gekennzeichnet, dass** jede Querprofilschiene (63, 64) der Randleiste (60) aus der Fläche einer Tür (15, 16) heraussteht.

6. Wagen (10) nach einem der Ansprüche 1 bis 5, **dadurch gekennzeichnet, dass** die eingebrachten Elemente am Umfang einen seitlichen Kragen zur Positionierung gegen das Äußere der entsprechenden Seitenwand (17, 18) des Gestells (12) umfassen.

7. Wagen (10) nach einem der Ansprüche 1 bis 6, **dadurch gekennzeichnet, dass** die Platten (25) der Verkleidung aus Acryl bestehen.

8. Wagen (10) nach einem der Ansprüche 2 bis 7, **dadurch gekennzeichnet, dass** jede Tür (15, 16) eine Acrylplatte umfasst, die auf einer Seite durch eine Profilschiene (32, 33) versteift ist, die schwenkbar auf Scharniere (34) montiert ist, die am entsprechenden Versteifungsrahmen (23, 24) vorgesehen sind.

9. Wagen (10) nach einem der Ansprüche 1 bis 8, **dadurch gekennzeichnet, dass** die Gleitschienen (43, 44, 45, 46) ein Beleuchtungssystem umfassen.

10. Wagen (10) nach einem der Ansprüche 1 bis 9, **dadurch gekennzeichnet, dass** jede Plattenauflage (39, 40) einen Elektrostecker (49) zur Versorgung der entsprechenden Heizplatte (35) umfasst, welche Versorgung mittels eines Sensors (50) zur Erfassung des Vorhandenseins von Essenstabletts (11) gesteuert wird.

11. Wagen (10) nach Anspruch 10, **dadurch gekennzeichnet, dass** der Sensor (50) zur Erfassung des Vorhandenseins von Essenstabletts (11) an eine Leuchtdiode angeschlossen ist, die von außerhalb des Wagens (10) zu sehen ist.
